Europäisches Patentamt

European Patent Office

Office européen des brevets

(11) Numéro de publication: **0 280 793**
**A1**

## (12) DEMANDE DE BREVET EUROPEEN

(21) Numéro de dépôt: 87200376.9

(22) Date de dépôt: 02.03.87

(51) Int. Cl.4: **H02P 13/06** , H02J 3/38

(43) Date de publication de la demande:
07.09.88 Bulletin 88/36

(84) Etats contractants désignés:
AT BE CH DE ES FR GB GR IT LI LU NL SE

(71) Demandeur: ACEC, Société Anonyme
Avenue Lloyd George 7
B-1050 Bruxelles(BE)

(72) Inventeur: Meurant, Léopold
16, Rue du Champ du Moulin
B-7400 Soignies(BE)

(54) Procédé et apareillage pour la mise en parallèle automatique de transformateurs.

(57) On décrit un procédé et un dispositif permettant la mise en parallèle automatique d'un transformateur débitant éventuellement lui-même sur un jeu de barres, sur un ou plusieurs transformateurs en charge. Pour ce faire, on adapte les positions de réglage en charge des transformateurs à mettre en parallèle en bloquant momentanément la ou les positions de réglage en charge du ou des transformateur(s) sur le(s)quel(s) le transformateur de substitution sera mis en parallèle et on y adapte la position du réglage en charge du transformateur de substitution, et on couple les transformateurs en parallèle dès l'équilibre. L'appareillage comporte au moins un transducteur de position classique (23,25,27) monté sur chaque transformateur (1,3,5), un transducteur soustracteur (31,33,35) monté chaque fois entre deux transducteurs de position (23,25,27) et un relais bidirectionnel monté sur chaque transducteur soustracteur qui commande le réglage de position en charge ainsi qu'un dispositif de commande (P4, P5, P6) des disjoncteurs de couplage adéquats (7,9).

FIG. 1

# PROCEDE ET APPAREILLAGE POUR LA MISE EN PARALLELE AUTOMATIQUE DE TRANSFORMATEURS

La présente invention est relative à un procédé permettant la mise en parallèle automatique d'un transformateur équipé d'un réglage en charge, débitant éventuellement lui-même sur un jeu de barres, sur un transformateur équipé d'un réglage en charge ou sur plusieurs transformateurs en parallèle débitant sur un jeu de barres séparé.

La présente invention concerne également un appareillage qui permet la mise en oeuvre du procédé du type susmentionné de manière automatique.

Actuellement, la commande pour la mise en parallèle d'un transformateur se fait généralement manuellement. Le but de la présente invention vise à fournir un procédé et un appareillage qui permettent d'effectuer cette commande automatiquement et rapidement. Un des problèmes à résoudre se pose notamment lorsque, dans le cas de deux transformateurs mis en parallèle, suite au fonctionnement de l'une quelconque des protections électriques ou mécaniques d'une baie de transformateurs, celle-ci est mise hors service. Dans ce cas, il y a lieu de substituer rapidement un autre transformateur ou transformateur de substitution sans que le transformateur restant qui reprend momentanément toute la charge ne déclenche par suite d'une surcharge.

Selon l'invention, on adapte les positions de réglage en charge des transformateurs à mettre en parallèle en bloquant momentanément la ou les positions de réglage en charge du ou des transformateur(s) sur le(s)-quel(s) le transformateur de substitution sera mis en parallèle et on y adapte la position du réglage en charge du transformateur de substitution par comparaison des signaux de transducteurs pilotant un relais bidirectionnel qui commande un régulateur à impulsions connecté au réglage en charge du transformateur de substitution jusqu'à équilibre des signaux des transducteurs avant d'opérer la fermeture des disjoncteurs correspondants.

L'appareillage de la présente invention destiné à la mise en oeuvre du procédé susmentionné comporte au moins un transducteur de position monté sur chaque transformateur, un transducteur soustracteur monté chaque fois entre deux transducteurs de position et un relais bidirectionnel monté sur chaque transducteur soustracteur ainsi qu'un dispositif de commande des disjoncteurs adéquats pour la mise en parallèle des transformateurs, en fonction du signal reçu par le transducteur soustracteur correspondant.

L'invention sera décrite plus en détail à l'appui des exemples qui suivent, illustrés par les figures annexées dans lesquelles :

- la figure 1 représente une vue simplifiée du schéma de connexion de trois transformateurs; et

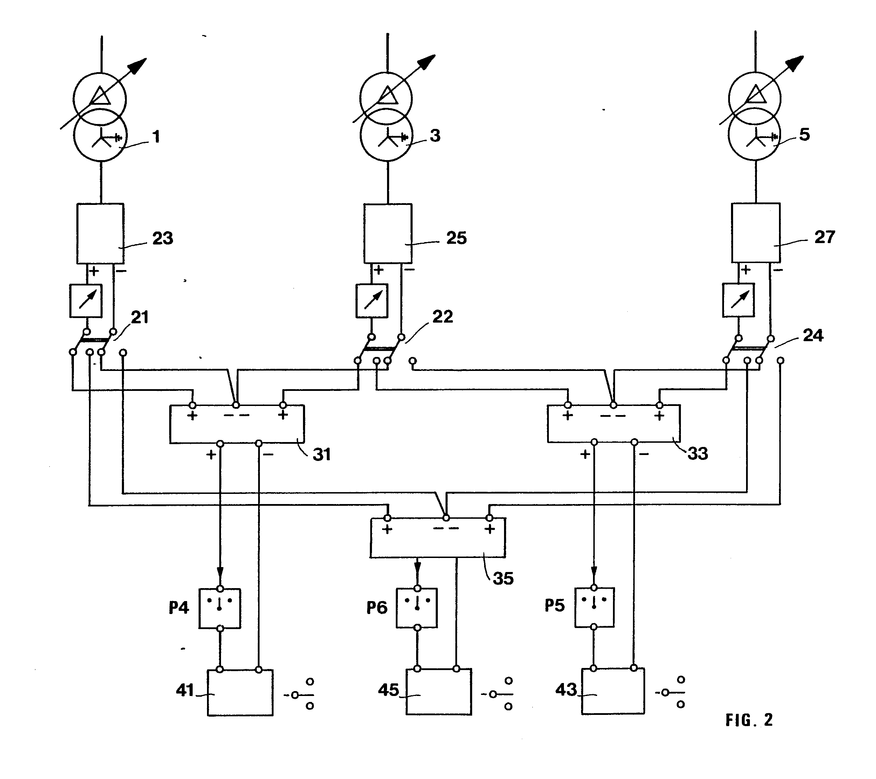

- la figure 2 représente une vue schématique de l'appareillage conforme à la présente invention, dans le cas de trois transformateurs.

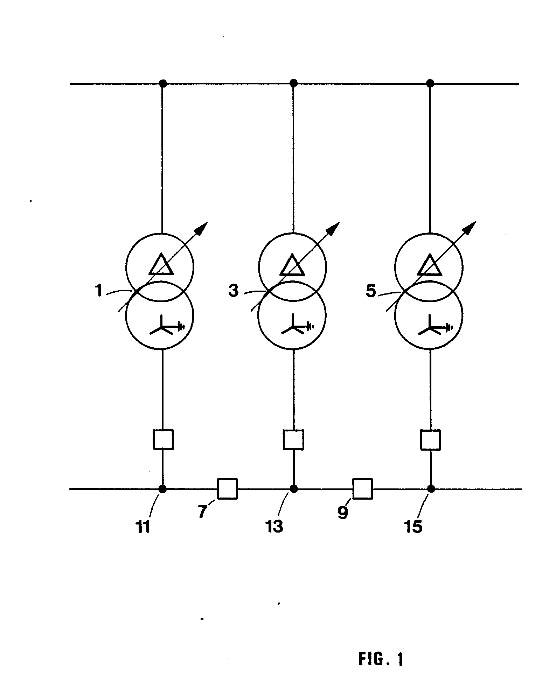

Dans le cas de la figure 1, trois transformateurs 1, 3 et 5 sont choisis pour pouvoir être mis en parallèle en cas de besoin. La mise en parallèle peut s'effectuer par la commande des disjoncteurs 7 et 9 reliant les jeux de barre 11 et 13 et/ou 13 et 15.

## Example 1

Supposons le cas d'utilisation suivant :

Le transformateur 1 débite sur le jeu de barres 11 et le transformateur 3 débite sur le jeu de barres 13, le transformateur 5 étant hors service.

Les disjoncteurs 7 et 9 sont ouverts.

On cherche à mettre en parallèle le transformateurs 1 et 3. Pour ce faire, pendant la période de transfert, le commutateur associé à la commande automatique du réglage en charge reste maintenu en position automatique, mais les ordres éventuellement donnés par le régulateur à impulsion (par exemple une bascule voltmétique) sont rendus inopérants et ce pour tous les transformateurs. On positionne le commutateur du choix d'association des jeux de barres en le plaçant sur la position "jeux de barres 11 + jeux de barres 13" de manière à permettre la mise en parallèle des transformateurs 1 et 3. La position du réglage en charge du transformateur 3 est amenée sur la position similaire du transformateur 1 de la manière suivante : le transducteur soustracteur 31 compare les signaux provenant des transducteurs de position 23 et 25 et commande, en fonction du signe du signal obtenu le relais bidirectionnel 41 qui permet la remise en circuit du réculateur à impulsions du réglage en charge du transformateur 3. Dès que le transducteur soustracteur 31 émet un signal indiquant l'équilibre des deux transformateurs, par exemple un signal nul, le relais bidirectionnel 41 est au repos et une temporisation adéquate de 10 sec par exemple assure l'enclenchement du disjoncteur de couplage 7, grâce un indicateur à contact P4 qui contrôle la position 0.

L'enclenchement réussi dudit disjoncteur de couplage 7 remet en service les commandes des réglages en charge des deux transformateurs, qui s'adaptent aux conditions de leur mise en parallèle.

Il est bien évident que l'appareillage selon la présente invention peut comporter des dispositifs annexes qui contrôlent les courants de circulation entre transformateurs et autres circuits de contrôle, tels que contrôle de la surcharge et déconnexion de certains utilisateurs, en cas de surcharge.

Par ailleurs, l'appareillage conforme à la présente invention peut être contrôlé par un circuit de temporisation qui ordonne l'annulation du processus de mise en parallèle si l'opération n'a pas été réalisée dans un temps donné.

Exemple 2

Dans un autre cas d'application, les transformateurs 1 et 3 marchent en parallèle, le disjoncteur de couplage 7 étant fermé tandis que le transformateur 5 débite en isolé sur le jeu de barres 15, le disjoncteur de couplage 9 étant ouvert.

Suite au fonctionnement de l'une quelconque des protections électriques ou mécaniques du transformateur 1, celui-ci est mis hors service. Dans de cas, on cherche à substituer la transformateur 5 au transformateur 1.

Pour ce faire, les commandes automatiques du réglage en charge des transformateurs 3 et 5, connues en soi sont bloquées momentanément. La position du réglage en charge du transformateur 5 est amenée sur la position similaire du transformateur 3 de la manière suivante : le transducteur soustracteur 33 compare les signaux provenant des transducteurs de position 25 et 27 et commande, en fonction du signe du signal obtenu le relais bidirectionnel 43 qui permet la mise en circuit du régulateur à impulsions du réglage en charge du transformateur 5. Dès que le transducteur soustracteur 33 émet un signal indiquant l'équilibre ds deux transformateurs, par exemple un signal nul, le relais bidirectionnel 43 est au repos et une temporisation adéquate de 10 sec par exemple assure l'enclenchement du disjoncteur de couplage 9, grâce à l'indicateur à contact P5.

L'enclenchement réussi dudit disjoncteur de couplage 9 remet en service les commandes des réglages en charge des deux transformateurs, qui s'adaptent aux conditions de leur mise en parallèle.

Des circuits annexes analogues à ceux décrits dans l'exemple 1 peuvent être prévus.

Il est bien évident que l'on peut prévoir un plus grand nombre de transformateurs. Dans le cas où il y aurait lieu de mettre un transformateur en parallèle sur plusieurs transformateurs qui sont déjà en parallèle, il peut être avantageux de compèter l'appareillage selon l'invention par un transducteur soustracteur commun à chaque fois deux transducteurs soustracteurs.

L'avantage du procédé automatique et de l'appareillage conforme à la présente invention réside dans le fait que la charge du réseau se répartit rapidement, le risque de déclenchement par suite de surcharge étant ré duit, notamment dans le cas de sous-stations non surveillées.

Revendications

1. Procédé permettant la mise en parallèle automatique d'un transformateur équipé d'un réglage en charge, débitant éventuellement lui-même sur un jeu de barres, sur un transformateur équipé d'un réglage en charge ou sur plusieurs transformateurs en parallèle débitant sur un jeu de barres séparés, caractérisé en ce qu'on adapte les positions de réglage en charge des transformateurs à mettre en parallèle par bloquage momentané la ou les commandes desdits réglages en charge du ou des transformateur(s) sur le(s)quel(s) le transformateur de substitution sera mis en parallèle, suivi d'une mise en position similaire du réglage en charge du transformateur de substitution par comparaison des signaux de transducteurs pilotant un relais bidirectionnel qui commande le régulateur à impulsions connecté au réglage en charge du transformateur à meetre en parallèle jusqu'à équilibre des signaux des transducteurs, avant d'opérer la fermeture des disjoncteurs correspondants.

2. Appareillage pour la msie en oeuvre du procédé selon la revendication 1 caractérisé en ce qu'il comporte au moins un transducteur de position (23,25,27) monté sur chaque transformateur (1,3,5), un transducteur soustracteur (31,33,35) monté chaque fois entre deux transducteurs de position (23,25,27) et un relais bidirectionnel (42,42,45) monté sur chaque transducteur soustracteur (31,33,35) ainsi qu'un dispositif de commande (P5, P6, P7) des disjoncteurs adéquats (7,9) pour la mise en parallèle des transformateurs, en fonction du signal reçu par le transducteur (31,33,35) correspondant.

3. Appareillage selon la revendication 2 caractérisé en ce qu'il comporte un transducteur soustracteur commun à chaque fois deux transducteurs soustracteurs.

4. Appareillage selon la revendication 2 ou 3 caractérisé en ce qu'il comporte des dispositifs annexes qui contrôlent les courants de circulation entre transformateurs et/ou la surcharge des transformateurs.

5. Appareillage selon l'une quelconque des revendications 2 à 4 caractérisé en ce qu'il comporte un dispositif ordonnant la déconnexion de certains utilisateurs en cas de surcharge.

6. Appareillage selon l'une quelconque des revendications 2 à 5 caractérisé en ce qu'il comporte un circuit de temporisation qui ordonne l'annulation du processus de mise en prallèle, si l'opération n'a pas été réalisée en un temps donné.

FIG. 1

FIG. 2

0 280 793

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 846 619 (BROWN, BOVERI & CO.)<br>* page 3, ligne 11 - page 6, ligne 29; page 7, ligne 21 - page 12, ligne 29; page 27, ligne 30 - page 28, ligne 4; revendications 1-3 * | 1-6 | H 02 P 13/06<br>H 02 J 3/38 |
| | --- | | |
| Y | DE-C-1 102 871 (LICENTIA)<br>* colonne 2, ligne 34 - colonne 4, ligne 6 * & DE-C-1 072 692 | 1-6 | |
| | --- | | |
| A | DE-A-1 953 997 (TRANSFORMATOREN UNION)<br>* page 2, ligne 1 - page 3, ligne 8 * | | |
| | ----- | | |

|  |
|---|
| DOMAINES TECHNIQUES RECHERCHES (Int. Cl.4) |
| G 05 F 1/00<br>H 02 J 3/00<br>H 02 P 13/00 |

Le présent rapport de recherche a été établi pour toutes les revendications

| Lieu de la recherche | Date d'achèvement de la recherche | Examinateur |
|---|---|---|
| BERLIN | 14-10-1987 | GESSNER E A F |